# EUROPEAN PATENT APPLICATION

(11) **EP 1 363 453 A2**
(43) Date of publication of application: **19.11.2003**
(21) Application number: 03252974.5
(22) Date of filing: 13.05.2003
(51) Int. Cl.: H04N 5/783

(54) **Image signal recording and/or reproducing apparatus and medium**

(30) Priority: 14.05.2002 JP 2002138190
(71) Applicant: Pioneer Corporation, Tokyo-to (JP)
(72) Inventor: Hashimoto, Michikazu, c/o Pioneer Corporation, Tsurugashima-shi, Saitama-ken (JP); Nakamura, Takeshi, c/o Pioneer Corporation, Tsurugashima-shi, Saitama-ken (JP); Miyasato, Hajime, c/o Pioneer Corporation, Tsurugashima-shi, Saitama-ken (JP); Tabata, Toshio, c/o Pioneer Corporation, Tsurugashima-shi, Saitama-ken (JP)
(74) Representative: Townsend, Victoria Jayne

(57) **Abstract**

A disclosed system includes: a slow-motion image detection unit (10) which detects a portion of a slow-motion image from an image signal; a recording unit (11) which records on a recording medium (1) an image signal and information of a slow-motion image obtained from the slow-motion image detection unit (10); a reproduction unit (12) which reproduces the recording medium (1) in which the image signal and the information of the slow-motion image are stored; and a reproduction control unit (13) which controls the reproduction unit (12). In recording, after the image signal is recorded ordinarily, the information of the slow-motion image is recorded in a predetermined area on the recording medium (1), while in reproduction, after the slow-motion image information is reproduced and stored first, the image signal is reproduced. The reproduction is possible in a variety of modes.

## Description

The present invention relates to a technological field for extracting information related to a slow-motion image from image information containing the slow-motion image, recording the image information and the information related to the slow-motion image on a recording medium, and reproducing or recording/reproducing these information items.

Recently, there are a number of TV broadcast stations as senders of information, from which many contents are sent. Such senders include, in addition to a broadcast station which uses a conventional ground wave, a broadcast station which utilizes a broadcast satellite, a communication satellite, or a cable, etc. There are also a variety of types of broadcast stations, such as an overall broadcast station handling general genres, a specialized channel mainly handling news, economics, sports, movies, music, etc., and, as a broadcast network, a channel covering all over the country, a channel covering a certain area, etc.

A viewer as a taker, on the other hand, selects and views those channels and contents thereof in which he is interested, who actually, however, cannot always view his desired contents because of a limit on time zone, overlapping of broadcast time zones of the broadcast stations, etc.

As a device to solve such a problem that a desired program cannot be viewed, a video recorder is becoming pervasive. This vide recorder uses as a recording medium a magnetic tape, a magnetic disk, an optical disc, etc., on which one can record an image televised by his desired broadcast station in his desired hour, to reproduce and view it later.

It is, however, difficult in terms of time to view all of these recorded contents; besides the users demands a usage pattern such as viewing only an outline or an important portion of these contents. To meet the demand, there has been proposed, for example, such a method of creating a digest of each topic by guessing a turning point of topics from a silent interval as in the case of a news program, or of creating a digest by presuming an exciting scene of sports from an interval having a large voice amplitude in a sports program, for example, a home run scene in the case of a baseball game or a goal scene in the case of a soccer game.

These methods, however, has such a technological problem that it is difficult to accurately extract an important scene from contents being televised by using the above-mentioned methods separately.

In view of the above, it is an object of the present invention to provide a recording medium, image recording apparatus, image reproduction apparatus, and image recording/reproduction apparatus that can accurately extract an important scene image from broadcast contents of a program desired to be recorded, create a digest based thereon, and reproduce it easily.

In one aspect of a recording medium of the present invention, a recording medium for recording an image signal is provided with: a first recording area for recording the image signal; and a second recording area for recording information related to a slow-motion image signal contained in the image signal.

According to this aspect, the recording medium is provided with an area for recording an image containing a slow-motion image signal to be transmitted from a broadcast station etc. and an area for recording information related to the slow-motion image signal. The information related to the slow-motion image signal contains, for example, a still picture etc. related to a slow-motion image and its recording position, recording time lapse, and reproduction rate. These information items are organized for each slow-motion image and recorded in a specific area.

The information of a slow-motion scene contained in a recorded image can all be read out and represented for reproduction, thus making it possible to easily confirm the contents of a program transmitted. Since attention is focused on an slow-motion image in particular, the contents of a noticeable scene of a sports program of, for example a baseball or soccer game, in which a slow-motion image is broadcast frequently can be known easily by retrieving the information related to a signal of the recorded slow-motion image. Besides the above-mentioned areas, a read-in area, a read-out area, etc. may be provided for dedicated use.

In another aspect of the recording medium of the present invention, the second recording area is provided with: an area for recording a recording position of the slow-motion image signal; an area for recording a recording time lapse of the slow-motion image signal; an area for recording a reproduction rate of the slow-motion image signal; and an area for recording a still picture related to the slow-motion image signal.

According to this aspect, as information related to a slow-motion image signal, recording position, recording time lapse, reproduction rate, and related still picture of the slow-motion image signal are recorded in their respective predetermined areas, to facilitate retrieval. Of course, another area for storing other information may be provided.

It is to be noted that still pictures related to the slow-motion image signal may be once recorded, in configuration, in a first recording area for recording of image signals so that subsequently a desired still picture related to the slow-motion image signal may be found out from the first recording area based on its recording position and recording time lapse recorded in a second recording area, for reproduction.

In further aspect of the recording medium of the present invention, the second recording area is further provided with an area for recording a recording position of an image signal which provides an original of the slow-motion image signal and is obtained from a recording time lapse of the slow-motion image signal and a reproduction rate of the slow-motion image signal.

According to this aspect, such an area is provided as to record a recording position of a real-time image signal which provides an original of a slow-motion image signal. For example, a scene of a home run being hit in broadcasting of a baseball game is often broadcast again in a slow motion. Based on a recording time lapse and a reproduction rate of the slow-motion image of this scene, a broadcast time of the original real-time image actually broadcast, that is, its recording position on a recording medium can be identified. It is thus possible to rapidly perform real-time reproduction of a scene which is retrieved on the basis of the information of the slow-motion image.

In further aspect of the recording medium of the present invention, recording medium is a disk-shaped medium.

According to this aspect, the recording medium used may come in a disk-shaped medium capable of recording. Suitable embodiments may include an optical disc, a magnetic disk, a magneto-optical disk. These are excellent in accessibility by a read/write head and well suited for use as a recording medium of the present invention. If a mass storage capacity is required, on the other hand, a tape-shaped recording medium may be used which has recording areas similarly organized.

In one aspect of an image recording apparatus of the present invention for recording an image signal on a recording medium, is provided with: an image signal recording device which records the image signal on the recording medium; a slow-motion image detection device which detects a slow-motion image signal contained in the image signal; a slow-motion recording position detection device which detects a recording position of the slow-motion image signal detected by the slow-motion image detection device; a slow-motion recording position recording device which records a recording position detected by the slow-motion recording position detection device; a recording time lapse recording device which records a recording time lapse of the slow-motion image signal; a reproduction rate detection device which detects a reproduction rate of the slow-motion image signal; and a still picture recording device which records a still picture related to the slow-motion image signal.

According to this aspect, the image recording apparatus records an image signal as it is when it is sent to a recording medium of the present invention, detects a slow-motion image signal contained in this image signal as well as a recording position, a recording time lapse, and a reproduction rate of the slow-motion image signal, extracts still picture information related to this slow-motion image, and records these information items in predetermined areas on the recording medium.

By this image recording apparatus, it is possible to distinguish between information of ordinarily recorded pictures and that related to a slow-motion image which are both recorded on a recording medium, to retrieve the contents recorded on the recording medium based on the information related to the slow-motion image when reproducing the recording medium, thus rapidly confirming the recorded contents or reproducing a scene of interest.

Furthermore, of course, the image recording apparatus of the present invention is provided with other components such as a signal processing device, a control device, a display device, etc. which are used in typical image recording apparatuses.

In another aspect of the image recording apparatus of the present invention, the image recording apparatus is provided with an operation device which obtains a recording time lapse of an image signal which provides an original of the slow-motion image signal, from a recording time lapse of the slow-motion image signal and a reproduction rate of the slow-motion image signal.

According to this aspect, a broadcast time lapse (T x R) of a real-time image which provides an original of a slow-motion image signal is obtained from a recording time lapse (T) and a reproduction rate (R) of the slow-motion image signal. Based on this broadcast time lapse thus obtained, a recording position and a recording time of that real-time image on a recording medium can be determined.

In further aspect of the image recording apparatus of the present invention, the image recording apparatus is further provided with an original signal recording position recording device which records, based on a recording time lapse of an image signal which provides an original of the slow-motion image signal obtained by the operation device, a recording position of the original image signal.

According to this aspect, by going back through a broadcast time lapse (T x R) of a real-time image which provides an original of a slow-motion image signal obtained from a recording time lapse (T) and a reproduction rate (R) of the slow-motion image signal, starting from a start time of the slow-motion image signal, a broadcast time hence a recording start position of the original real-time image is determined. By recording the recording start position beforehand, it is possible to rapidly reproduce the real-time image of a retrieved slow-motion image. Furthermore, it is possible to reproduce digests in order to sequentially reproduce original real-time images of all of the recorded slow-motion images.

In further aspect of the image recording apparatus of the present invention, a recording position of the slow-motion image signal, a recording time lapse of the slow-motion image signal, a reproduction rate of the slow-motion image signal, a recording position of an image signal which provides an original of the slow-motion image signal, and a still picture related to the slow-motion image signal are recorded in a predetermined area on the recording medium after the image signal is recorded.

According to this aspect, recording position, recording time lapse, and reproduction rate of a slow-motion image signal, a recording position of an original image signal of the slow-motion image signal, and a still picture related to the slow-motion image signal which are stored in a memory temporarily are recorded together in predetermined areas on a recording medium after a program which is broadcast is normally recorded completely.

In further aspect of the image recording apparatus of the present invention, the slow-motion image signal is determined on the basis of inter-field correlation of image data.

According to this aspect, a slow-motion image signal contained in an image signal is decided on the basis of picture data correlation between an odd-numbered field and an even-numbered field which constitute an image. In the case of, for example, half-speed slow-motion display, the correlation is high because the odd-numbered and even-numbered fields are composed of the same image. Furthermore, even if these fields are corrected in correlation in order to reduce jaggy, the correlation is kept high. If this correlation is held high for a predetermined time lapse, the image is decided to be of a slow motion. If the correlation is held extremely high for long time, it is decided to be of a still picture, whereas if the correlation is high but only for short time, it is decided to be of a moving picture.

In further aspect of the image recording apparatus of the present invention, the slow-motion image signal is determined on the basis of the number of blocks that are recognized to be of a slow-motion image signal, a field being divided into a plurality of blocks beforehand to obtain inter-field correlation of picture data for each of the blocks.

According to this aspect, a slow-motion image signal is decided by dividing a field into a plurality of blocks to obtain correlation for each of the blocks in the same manner as described above so that the image may be decided on the basis of the number of blocks that has high correlation. By this aspect, an entire screen is discussed in detail, thus giving more correct decision.

In one aspect of an image reproduction apparatus of the present invention for reproducing a recording medium in which an image signal containing a slow-motion image signal is recorded, is provided with: an image signal reproduction device which reproduces the image signal; a slow-motion position information storage device which stores position information recording the slow-motion image signal contained in a signal reproduced by the image signal reproduction device; a slow-motion recording time lapse storage device which stores recording time lapse information of the slow-motion image signal contained in a signal reproduced by the image signal reproduction device; a reproduction rate storage device which stores reproduction rate information of the slow-motion image signal contained in a signal reproduced by the image signal reproduction device; and a still picture storage device which stores a still picture related to the slow-motion image signal contained in a signal reproduced by the image signal reproduction device.

According to this aspect, the image reproduction apparatus reproduces a recording medium having an area in which normally recorded information is recorded and an area in which information related to an slow-motion image is recorded so that images can be retrieved or controlled in reproduction based on the information related to the slow-motion image.

The information related to the slow-motion image refers to a recording time lapse, a recording position, a reproduction rate, a still picture, etc. These information items are organized and recorded in predetermined areas on the recording medium. These information items are utilized by a user when he operates this apparatus, to retrieve information of recorded images or determine a reproduction mode, for example. It is possible, for example, to use the information digest version-wise in order to view only a portion broadcast in slow-motion display of recorded contents.

Furthermore, of course, the image reproduction apparatus of the present invention is provided with other components such as a reproduction control device, a signal processing device, a display device, etc. which are used in typical image reproduction apparatuses.

In another aspect of the image reproduction apparatus of the present invention, the image reproduction apparatus is further provided with an original signal recording position storage device which stores position information of an image signal which provides an original of the slow-motion image signal contained in a signal reproduced by the image signal reproduction device.

According to this aspect, information related to a recording position of an image signal which provides an original of a slow-motion image signal is obtained, so that based on this recording position information, a real-time image that corresponds to the slow-motion image can be reproduced rapidly. Furthermore, based on information related to the slow-motion image, a recording position of the concerned real-time image can be retrieved, to set program-wise reproduction easily.

In further aspect of the image reproduction apparatus of the present invention, the image signal reproduction device reproduces the image signal after information related to the slow-motion image signal is reproduced and stored.

According to this aspect, first an area recording therein information related to a slow-motion image signal is reproduced, to store in a memory reproduced information, for example, a recording time lapse, a recording position, a reproduction rate, a still picture, etc. and then reproduce an ordinary recorded area. It can be used in control of recording/reproduction because information of a slow-motion image being recorded is obtained beforehand.

In further aspect of the image reproduction apparatus, the image reproduction apparatus is provided with an instruction device which instructs a display mode.

According to this aspect, an instructing device described therein is used to input a recording/reproduction mode based on information of a slow-motion image. For example, it is possible to select such a mode as to pick up only a slow-motion image and watch it, to cut out a slow-motion image and watch it, or to watch only a real-time image related to a slow-motion image.

In one aspect of an image recording/reproduction apparatus of the present invention for recording an image signal containing a slow-motion image signal on a recording medium and reproducing the image signal, is provided with an image recording unit and an image reproduction unit. (i) The image recording unit is provided with: an image signal recording device which records the image signal on the recording medium; a slow-motion image detection device which detects a slow-motion image signal contained in the image signal; a slow-motion recording position detection device which detects a recording position of the slow-motion image signal detected by the slow-motion image detection device; a slow-motion recording position recording device which records a recording position detected by the slow-motion recording position detection device; a recording time lapse recording device which records a recording time lapse of the slow-motion image signal; a reproduction rate detection device which detects a reproduction rate of the slow-motion image signal; and a still picture recording device which records a still picture related to the slow-motion image signal. In addition, (ii) the image reproduction unit is provided with: an image signal reproduction device which reproduces the image signal; a slow-motion position information storage device which reads out and stores position information recording the slow-motion image signal, from a signal reproduced by the image signal reproduction device; a slow-motion recording time lapse storage device which reads out and stores recording time lapse information of the slow-motion image signal from a signal reproduced by the image signal reproduction device; and a reproduction rate storage device which reads out and stores reproduction rate information of the slow-motion image signal from a signal reproduced by the image signal reproduction device.

According to this aspect, the image recording/reproduction apparatus is provided with an ordinary recording device as an image recording unit and a device for detecting and recording information related to a slow-motion image which is to be recorded and also which is contained in an image signal, in which an image reproduction unit is provided with an ordinary device for reproducing a recorded image and a device for reproducing and storing information related to the slow-motion image, thus enabling recording and reproducing an image to be broadcast. Besides, it comprises all functions related to the above-mentioned mage recording apparatus and those related to the above-mentioned image reproduction apparatus.

Furthermore, of course the image recording/reproduction apparatus of the present invention is provided with typical functions required to record and reproduce an image as an image recording/reproduction apparatus.

Those actions and other advantages of the present invention will be apparent from the following description of embodiments.
FIG. 1 is a diagram for showing a data structure of a recording medium of the present invention;
FIG. 2 is a block diagram for outlining a system of the present invention which detects a slow-motion image from an image signal containing a slow-motion image and records/reproduces the detected information together with the image signal;
FIG. 3 is an illustration for showing a state where a plurality of still pictures related to a recorded slow-motion image are displayed on a display, thus indicating that it is possible to instruct reproducing a desired slow-motion image from these still pictures;
FIG. 4 is a timing chart for showing a relationship between a "still field" and a "motion field" in a slow-motion image;
FIG. 5 is a flow chart for showing a flow of extracting a slow-motion image from an image signal;
FIG. 6 is an illustration for showing how to obtain correlation required to determine a slow-motion image;
FIG. 7 is a block diagram for outlining a configuration of an image recording apparatus of the present invention;
FIG. 8 is a flow chart for showing a flow of operations of the image recording apparatus of the present invention;
FIG. 9 is a block diagram for outlining a configuration of an image reproduction apparatus of the present invention;
FIG. 10 is a flow chart for showing a flow of operations of the image reproduction apparatus of the present invention; and
FIG. 11 is a block diagram for outlining a configuration of an image recording/reproduction apparatus of the present invention.

### (Embodiment relating to recording medium)

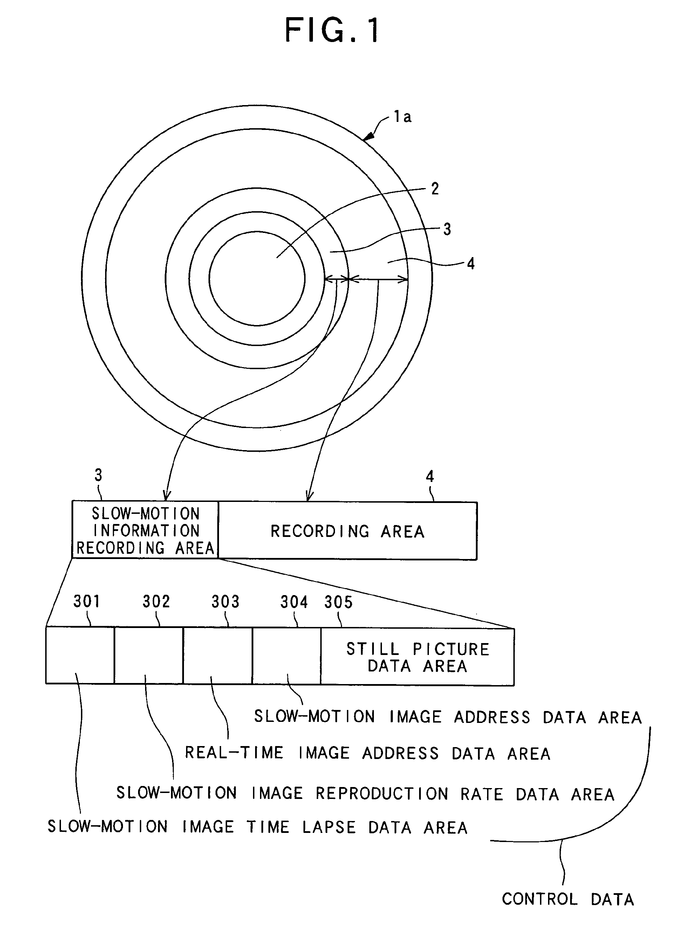

The following will describe an embodiment of a recording medium of the present invention with reference to FIG. 1. The present embodiment has applied the recording medium of the present invention to an optical disc capable of recording (write-in) and reproduction.

As shown in FIG. 1, an optical disc 1a is capable of writing or rewriting once or a plurality of number of times by a recording method such as a magneto-optics method, a phase-change method. The optical disc 1a has a slow-motion image information recording area 3 and a recording area 4 around a center hole 2 as a center, which is for attachment to a recording/reproduction apparatus, in a direction from an inner periphery to an outer periphery. Furthermore, the optical disc 1a may have a lead-in area in its innermost periphery and a lead-out area in its outermost periphery. Moreover, a track is spirally provided around the center hole 2 as the center, along which information is recorded. This track may be wobbled or provided with a pre-pit.

The recording area 4 is provided to record in an ordinary mode a program which is broadcast from a broadcast station, while the slow-motion image information recording area 3 is provided to record information related to a slow-motion image each time it is given in a program on the air. The slow-motion image information recording area 3 further comprises a slow-motion image address data area 301 as control data for controlling of reproduction at the apparatus, a real-time image address data area 302, a slow-motion image reproduction rate data area 303, a slow-motion image time lapse data area 304, a still picture data area 305 for recording a still picture related to a slow-motion image, etc.

The slow-motion image address data area 301 records therein a position in the recording area 4 of the optical disc 1a at which a slow-motion image is recorded each time the slow-motion image appears in a program on the air. It also records therein a time when the program is recorded, a time lapse which has elapsed from a moment of start of recording, etc.

The real-time image address data area 302 records therein a position on the optical disc 1a at which a real-time image corresponding to a recorded slow-motion image is recorded. As describe above, it may record therein a time at which the program is recorded, a time lapse which has elapsed from a moment of start of recording, etc.

The slow-motion image reproduction rate data area 303 records therein a slow-motion reproduction rate with respect to a real-time image. If, for example, an image televised real time is reproduced during twice a real time lapse, the rate is 0.5.

The slow-motion image time lapse data area 304 records therein a time lapse of slow-motion televising. Based on this recorded time lapse and a reproduction rate, an actual time lapse of slow-motion image televising can be obtained. Immediately after actual televising, its slow-motion version is televised, so that it is possible to determine a recording position of the original image based on a relationship between the reproduction rate and the televised time lapse. In such a manner, information is determined of a position in the real-time image address data area 302 at which the above-mentioned original image is recorded.

The still picture data area 305, on the other hand, records therein part of a televised slow-motion image as a still picture. By displaying this still picture, it is possible to know about televised slow-motion contents and, based on the contents, to instruct to reproduce real-time recording of the relevant scene.

Therefore, as information of a slow-motion image is used one set of the slow-motion image address data area 301, the real-time image address data area 302, the slow-motion image reproduction rate data area 303, the slow-motion image time lapse data area 304, and the still picture data area 305 of the slow-motion image information recording area 3 for each slow-motion scene.

It is to be noted that of course the data area is not limited to the one described above but may be such as to record therein any other information used in control over the reproduction of information of a recorded image. Furthermore, a layout is not limited to the one shown in FIG. 1. Furthermore, in place of the above-mentioned optical disc, a magnetic disk may be employed or even a tape-shaped recording medium may be used because of its recording capacity as far as the recording area and the data area are set similarly.

### (Embodiment relating to recording/reproduction system)

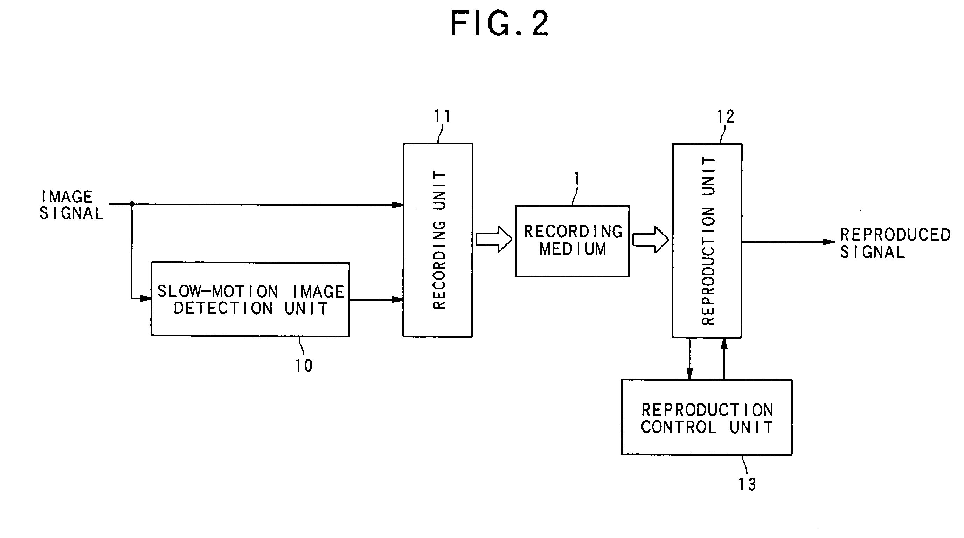

The following will describe, with reference to FIG. 2, a system which uses a recording medium 1 according to the above-mentioned embodiment, to detect a slow-motion image from an image signal containing the slow-motion image and record and reproduce the detected information together with the image signal.

As shown in FIG. 2, the system has an outlined block diagram configuration comprised of a slow-motion mage detection unit 10 for detecting a slow-motion image portion from an image signal, a recording unit 11 for recording the image signal and information of the slow-motion image obtained from the slow-motion image detection unit 10, a reproduction unit 12 for reproducing the recording medium 1 which records therein the image signal and the information of the slow-motion image, and a reproduction control unit 13 for controlling the reproduction unit 12.

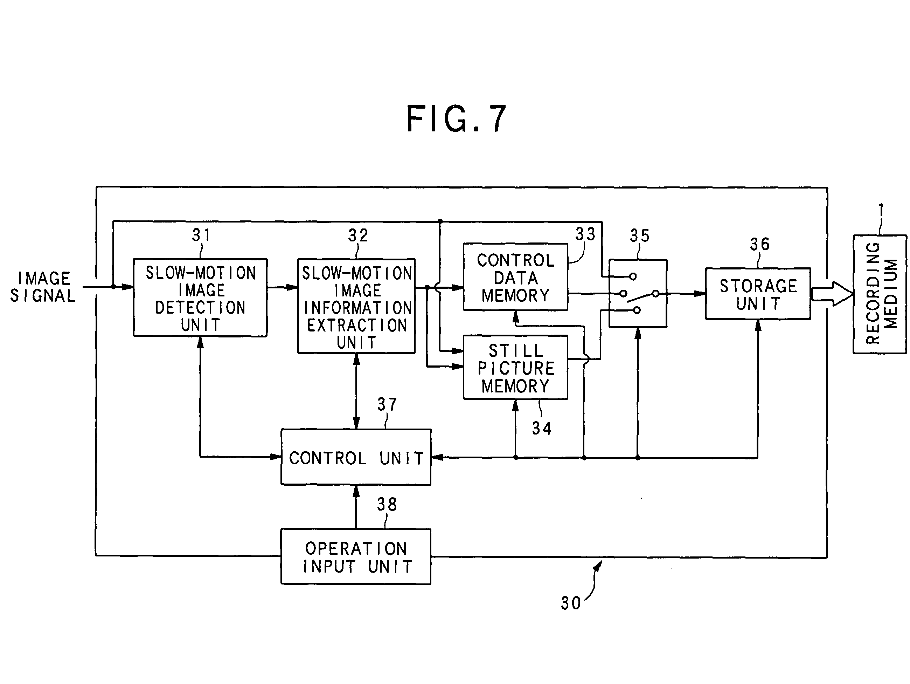

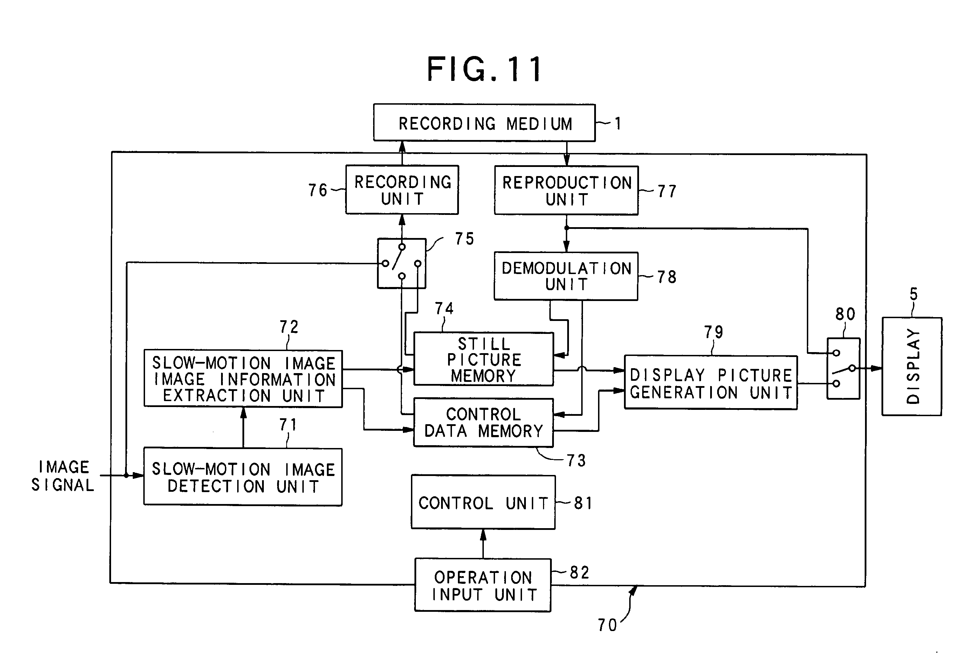

As shown in FIG. 1, the recording medium 1 has a recording area and a data area, so that the recording unit 11 performs ordinary recording operations to the recording area and also records the slow-motion image information in each of the data area. The reproduction unit 12, on the other hand, performs ordinary reproduction operations on the recording medium 1 and also outputs a reproduction signal which determines a reproduction mode via the reproduction control unit 13 in accordance with a user's instruction based on the information of a slow-motion image to be reproduced. It is to be noted that more specific recording apparatus and reproduction apparatus as well as their operations are detailed later with reference to FIGS. 7-12.

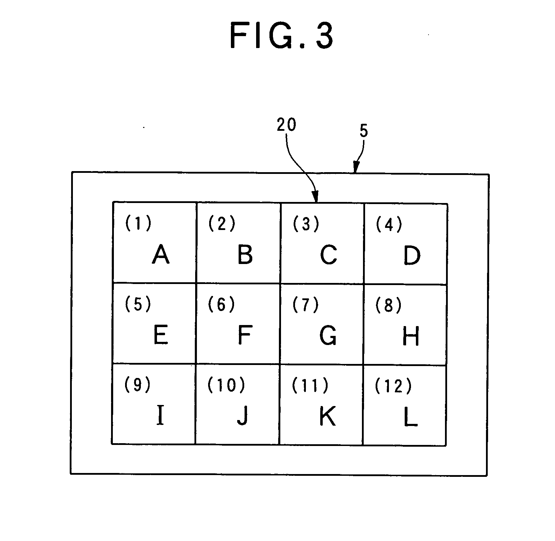

One example of image reproduction by use of slow-motion image information is described below with reference to FIG. 3. A still picture related to a slow-motion image indicated by a reference symbol 20 is displayed on a screen of a display 5 is there. This still picture is read out from the sill picture data area 305 at the beginning of reproduction. For example, twelve still pictures A through L are displayed. These are obtained by compressing still pictures recorded in the still picture data area 305 into a predetermined size and displayed on the one display screen.

As for information of these slow-motion images, when an ordinary recorded image is reproduced, first, data in the slow-motion image information recording area 3 is reproduced and its information is stored in a storage device such as a semiconductor memory, based on which data the picture are created. The user can operate the reproduction control unit 13 to thereby display this still picture on the display 5 and specify his desired scene, thus retrieving and displaying concerned slow-motion image and real-time recorded image. These operations can be performed by interrupting an ordinary recording/reproduction. A picture can be specifies by, for example, entering a number to select a still picture, for example, (1) through the operation device or by touching a desired still picture if a display unit 20 has a touch-panel function.

### (Decision of slow-motion image)

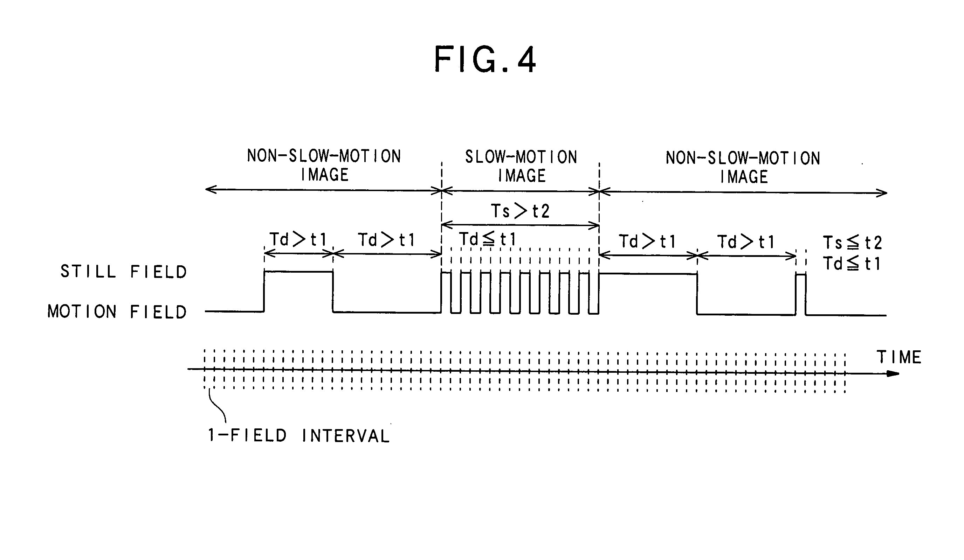

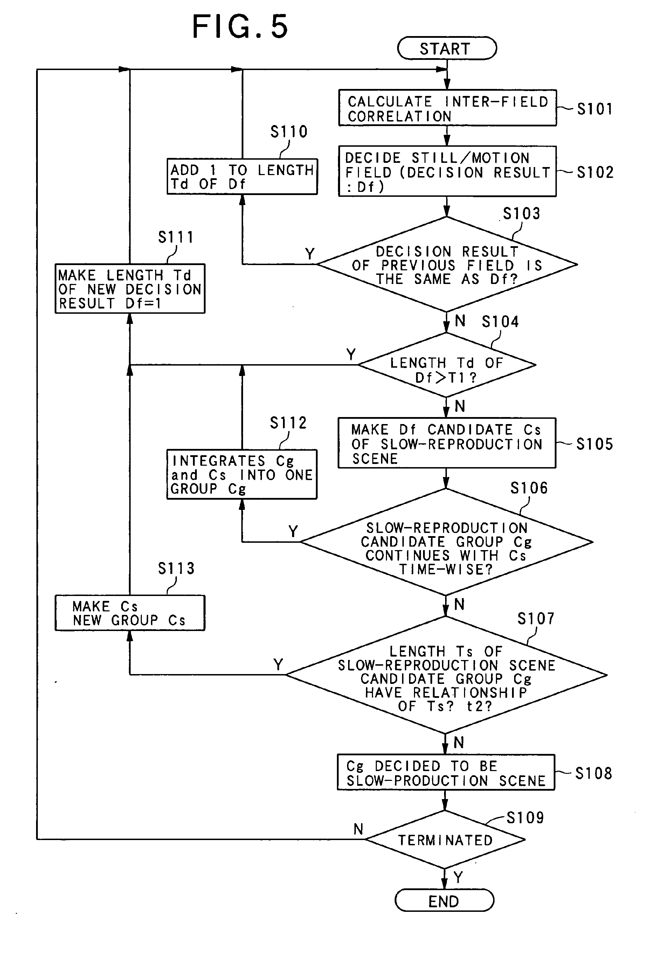

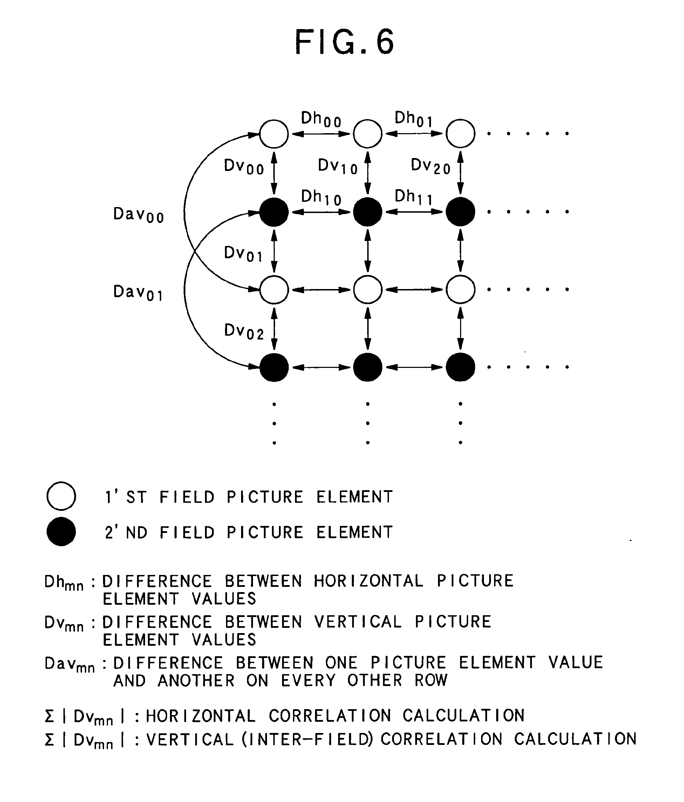

The following will describe decision of a slow-motion image with reference to FIGS. 4-6. FIG. 4 shows a relationship between a "still field" and a "motion field" in a slow-motion image, FIG. 5 shows a flow of extracting a slow-motion image from an image signal, and FIG. 6 shows how to obtain a correlation value required to decide a slow-motion image. In the present application, a "still picture" refers to a field picture whose correlation value with respect to a preceding field is more than a predetermined value, and a "motion field" refers to a field picture whose correlation value with respect to a preceding field is less than the predetermined value. Furthermore, a "correlation value" refers to a value which indicates the sameness among the field pictures.

First, as shown in FIG. 4, when a motion picture is being reproduced, the field pictures vary from one of them to another and so have low correlation among them, so that if any one of the field pictures has a correlation value which is less than the predetermined as evaluated within a predetermined time lapse, it is supposed to be in the "motion field" state. When a still picture is being reproduced, on the other hand, the field pictures are the same as each other and so have high correlation among them, so that if any one of them has a correlation value which is more than the predetermined value as evaluated for the predetermined time lapse, it is supposed to be in the "still field" state.

Next, in a slow-motion image, the same field picture is used repeatedly corresponding to the degree of slow-motion. Therefore, the "motion field" and "still field" states appear repeatedly in a short time interval. In this case, ordinary recording is performed and, at the same time, information about the slow-motion image is obtained and stored and, upon completion of the ordinary recording, recorded at a predetermined position on the recording medium 1.

Next, along the flow of extracting a slow-motion image, as shown in FIG. 5, first correlation between fields is obtained (step 101). The correlation value can be obtained as shown in FIG. 6, for example, which is detailed later. In the case of a moving picture, the field images vary sequentially and so have a low correlation value, whereas in the case of a still picture, the same field picture is repeated and so has a high correlation value. A slow-motion is performed by repeating the same field and combining the next moving picture's field picture and so exhibits a high correlation value state and a low correlation value state alternately. This is a state of the slow-motion image shown in FIG. 4.

Next, it is determined whether the field is a still field or a motion field (step 102). Then assuming that a determination result is Df, it is determined whether this determination result is the same as a determination result Df of the previous field (step 103). If the determination results coincide with each other (YES), one (1) is added to a length Td of the decision result Df of the field (step 110) and the processing returns to step 101.

If the determination results do not coincide with each other (NO), on the other hand, it is determined whether the length Td of Df is longer than a predetermined reference length T1 (step 104). If Td is longer than T1 (YES), a new determination result Df is replaced with 1 (step 111) and the processing returns to step 101; whereas if Td is not longer than T1 (NO), this Df is set to candidate Cs for a slow-motion reproduction scene (step 105).

Next, it is determined whether the reproduction scene candidate Cs and a candidate group Cg of slow-motion reproduction scene candidates are continuous in terms of time (step 106). If they are continuous with each other (YES), the candidate group Cg and the reproduction scene candidate Cs are integrated into a new candidate group Cg (step 112) and the processing returns to step 101 via step 111.

If they are not continuous (NO), on the other hand, it is determined whether a length Ts of the slow-motion reproduction scene candidate group Cg is shorter than a predetermined reference length T2 (step 107). If such is the case (YES), this Cs is set to a new candidate group Cg (step 113) and the processing returns to step 101 via step 111. Otherwise (NO), on the other hand, it is determined that the candidate group Cg is a slow-motion reproduction scene (step 108).

Next, it is determined whether the slow-motion reproduction scene is detected and recorded completely (step 109) and, if they are not completed (NO), the operation starting from step 101 is repeated and, if they are completed (YES), the detection and recording of the slow-motion reproduction scene is terminated.

Thereafter, if these slow-motion candidates are continuous with each other in terms of time, they are integrated into one candidate group. If the length Ts of this candidate group is t2 or more, it is determined that this candidate group is a slow-motion image.

It is noted that a slow-motion reproduction rate R is obtained from the number of motion fields Ns and the number of still fields Nm of a portion determined to be a slow-motion reproduction scene, as follows:

R = Nm/(Ns + Nm)

An example of calculating an inter-field correlation value is described with reference to FIG. 6 as follows. In the figure, an empty circle represents a first field picture element, a solid circle represents a second field picture element, Dhmn represents a difference between horizontally adjacent picture element values, Dvmn represents a difference between vertically adjacent picture element values, Davmn represents a difference between one picture element and another in every other row, Σ|Dhmn| represents a horizontal correlation calculation, and Σ|Dvmn| represents a vertical (inter-field) correlation calculation.

The calculations include, for example, Σ|Dvmn|, Σ(Dvmn)², Σ|Dvmn|/Σ|Dhmn|, Σ|Davmn|/Σ|Dvmn|, etc. Σ|Dvmn| gives a total sum of absolute values of differences between the vertically adjacent picture element values, Σ(Dvmn)² gives a total sum of differences between the vertically adjacent picture element values, Σ|Dvmn|/Σ|Dhmn| gives a value obtained by dividing a total sum of absolute values of differences between the vertically adjacent picture element values by a total sum of absolute values of differences between the horizontally adjacent picture element values, and S|Davmn|/Σ|Dvmn| gives a value obtained by dividing a total sum of absolute values of differences between each one picture element and another in every other row by an absolute value between vertically adjacent picture element values.

A still picture is obtained by displaying the same field picture (displaying the same field picture twice in the case of a 0.5 speed-rate slow-motion) using both an odd-numbered field and an even-numbered field. Therefore, a picture element difference between the vertically adjacent scanning lines is small, so that if a value obtained in the above-mentioned correlation calculation is small, it is determined that the picture sameness is high and hence that the picture is a still picture and, if the value is large, decides that it is a moving picture.

### (Embodiment of image recording apparatus)

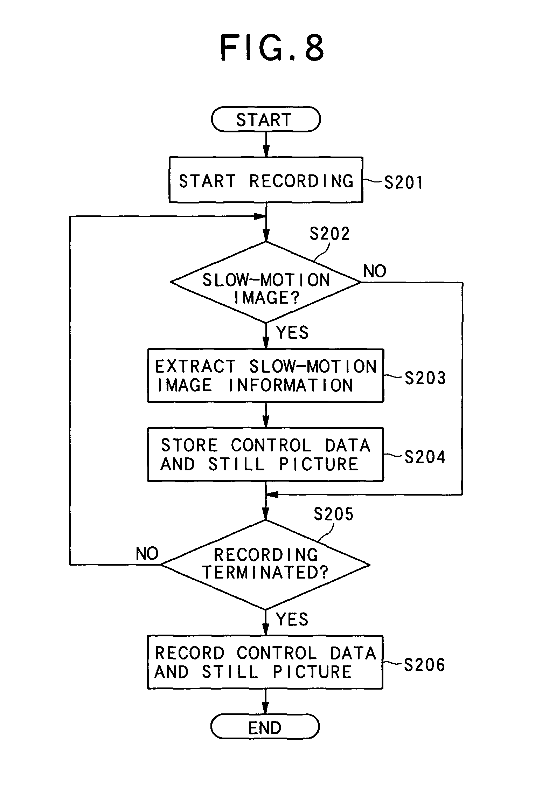

The following will describe an embodiment of an image recording apparatus of the present invention with reference to FIGS. 7 and 8. The image recording apparatus of the present embodiment uses a recording medium of the present invention, to record an image and also detect a slow-motion image in an image signal and record information related to this slow-motion image. It is to be noted that FIG. 7 is a block diagram for outlining a configuration of the image recording apparatus according to the present embodiment and FIG. 8, a flow chart for showing a flow of operations of the image recording apparatus.

An image recording apparatus 30 comprises a slow-motion image detection unit 31, a slow-motion image information extraction unit 32, a control data memory 33, a still picture memory 34, a switch 35, a recording unit 36, a control unit 37, and an operation input unit 38.

The slow-motion image detection unit 31 detects a slow-motion image contained in an image signal to be recorded. It is specifically detected by, for example, a method for obtaining correlation described with reference to FIG. 6. This unit 31 detects also a reproduction rate of the slow-motion image.

The slow-motion image information extraction unit 32 detects information related to a slow-motion image, if detected by the slow-motion image detection unit 31, for example, its starting time, recording position on the recording medium 1, duration, recording start position of an original real-time image, etc. In the present application, these information items related to the slow-motion image are handled as control data. This control data is used in control when a recorded image is reproduced. Furthermore, a still picture is recorded as something which represents the contents of the relevant slow-motion image.

A time lapse during which a real-time image which provides an original of the slow-motion image is broadcast, that is, a recording time lapse is determined by a reproduction rate (R) of the slow-motion image and its duration, that is, a length (L) of the recording unit, so that L x R gives a length over which the real-time image is recorded. Therefore, a start position of the real-time image which provides an original of the slow-motion image can be determined as a position which precedes by L x R the start position of the slow-motion image. This provides a recording start position of the real-time image which provides an original of the slow-motion image.

The control data memory 33 stores a slow-motion image's start time, recording position on a medium, duration, reproduction rate, recording start position of an original real-time image, etc. which are extracted by the slow-motion image information extraction unit 32. These data items are recorded at a predetermined position on the recording medium 1 when recording of broadcast program is completed.

The still picture memory 34 stores a still picture which is picked up by the slow-motion image information extraction unit 32 as a picture which represents the contents of each of detected slow-motion images and, upon completion of recording of the broadcast program, records it at a predetermined position on the recording medium 1. This still picture is thus recorded together with the above-mentioned control data.

The switch 35 is arranged to connect the following-stage recording unit 36 to the image signal during recording of the broadcast program, to the control data memory 33 when recording control data, and to the still picture memory 34 when recording a still picture. This selection is controlled by the control unit 37. Furthermore, when the user gives instruction from the operation input unit 38 to terminate recording of the broadcast program, the control unit 37 decides it to thereby stop recording of the broadcast program by the recording unit 36 and then record the control data, thus ending the process.

The recording unit 36 stores control data and a still picture which are related to a program and a slow-motion image which are broadcast under the control of the control unit 37, in a predetermined area on the recording medium 1.

The control unit 37 controls operations of the image recording apparatus 30 based on an instruction from the operation input unit 38 and data on an actuation situation of each of the units. It is provided with a CPU etc. having a program which describes a method and a procedure for control. Furthermore, it is also possible to provide control so as to display an actuation situation on a display device not shown.

The operation input unit 38 is a device for receiving an instruction of the user to operate the image recording apparatus 30, using a mechanical input device or a remote control by use of infrared light etc. for inputting.

The following will describe a flow of operations of the image recording apparatus 30 with reference to FIG. 8. First, recording of a program which is broadcast is started (S201). It is supposed that slow-motion images are inserted at a plurality of positions in the broadcast program. The program is recorded by recording a broadcast image as it is. The broadcast image is checked so that it is determined whether it is a slow-motion image (S202).

If it is a slow-motion image, slow-motion image information is extracted (S203). The slow-motion image information includes slow-motion image's start time, recording position, duration, reproduction rate, recording start position of an original real-time image, extracted still picture, etc. The extracted slow-motion image information is stored in the control data memory 33 and the still picture memory 34 (S204).

After step 204 or if it is determined that the relevant image is not a slow-motion image at step 202, it is determined whether recording is to be terminated (S205) and, if the recording is to continue, the processing returns to step 202 to check the slow-motion image. If the recording is to be terminated, the ordinary recording is terminated. Then, the extracted control data and the still picture are read out from the control data memory 33 and the still picture memory 34 and recorded in a predetermined area on the recording medium 1, that is, the slow-motion image information recording area 3.

The above-mentioned configuration and operations make it possible to record an image signal containing a slow-motion image and also extract information related to the slow-motion image and record it on the recording medium 1. Based on these information items, it is possible to easily know about the contents of the recorded image and also to easily retrieve and reproduce a portion thereof which the user wishes to watch.

It is to be noted that the above-mentioned configuration components is provided with an addition of a device that the image recording apparatus typically has.

### (Embodiment of image reproduction apparatus)

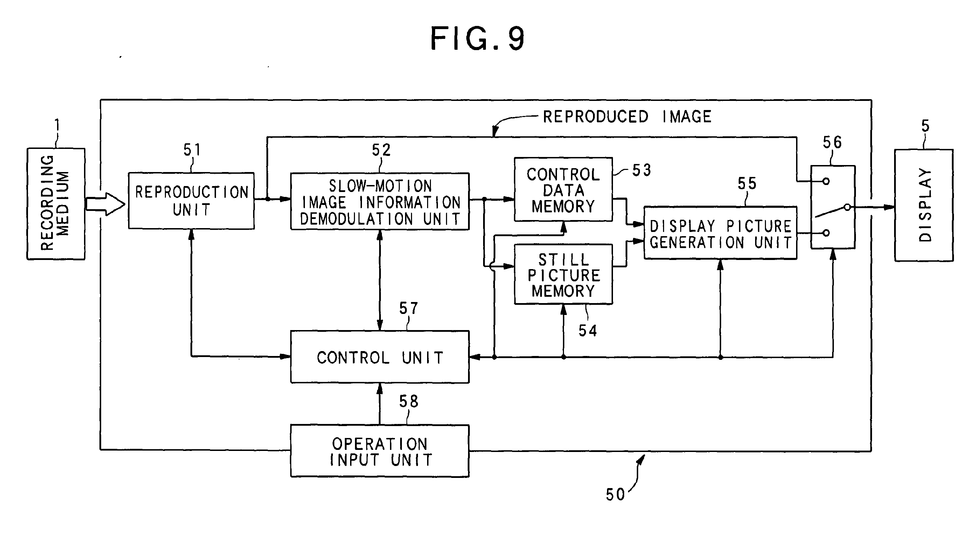

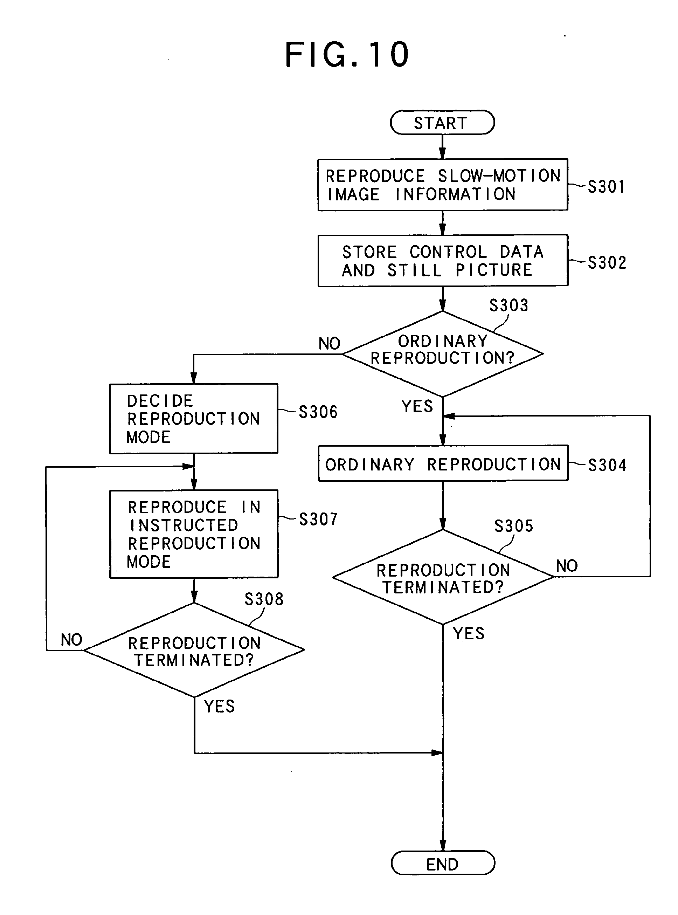

The following will describe an embodiment of an image reproduction apparatus of the present invention with reference to FIGS. 9 and 10. The image reproduction apparatus according to the present embodiment reproduces an image signal recorded on the recording medium 1 of the present invention and information related to a slow-motion image recorded after being extracted from the image signal, to enable a variety of reproduction operations. It is to be noted that FIG. 9 is a block diagram for outlining a configuration of the image reproduction apparatus according to the present embodiment and FIG. 10, a flow chart for showing a flow of operations of the image reproduction apparatus.

An image reproduction apparatus 50 comprises a reproduction unit 51, a slow-motion image information demodulation unit 52, a control data memory 53, a still picture memory 54, a display picture generation unit 55, a switch 56, a control unit 57, and an operation input unit 58.

The reproduction unit 51 reproduces information related to a recorded program and a slow-motion image which are recorded on the recording medium 1. When an reproduction operation is started by a user's operation on the operation input unit 58, first the control data is reproduced, followed by start of an ordinary reproduction operation of the recorded contents. Furthermore, they are reproduced by accessing an arbitrary position based on a user's instruction.

The slow-motion image information demodulation unit 52 demodulates the slow-motion image's start time, recording position on the recording medium 1, duration, reproduction rate, recording start position of the original real-time image, etc. which are recorded as control data in the slow-motion image information recording area 3. Based on these data items, the image reproduction apparatus 50 is controlled in operation. Furthermore, a still picture recorded in the still picture data area 305 is restored.

The control data memory 53 records control data which is demodulated at the slow-motion image information demodulation unit 52. It is utilized after being read out when the image reproduction apparatus 50 is controlled in operation.

The still picture memory 54 stores a still picture related to a slow-motion image which is restored by the slow-motion image information demodulation unit 52. It is utilized after being read out when a reproduction position of the image reproduction apparatus 50 is selected.

The display picture generation unit 55 generates a picture which is displayed to specify an operation, a reproduction position, a reproduction mode, etc. which are required to reproduce a picture which is recorded by the image reproduction apparatus 50 on the recording medium 1. It specifically reads out and creates a still picture recorded in the still picture memory 54 based on read out information of a slow-motion image's start time, recording position on the recording medium 1, duration, reproduction rate, recording start position of an original real-time image.

One example of the picture which is thus displayed is shown in FIG. 3. On this figure, pictures to be reproduced are selected and their reproduction order is specified. These instruction and selection are performed by accessing a position displayed through the operation input unit 58.

The switch 56 selects a signal to be displayed on the display apparatus 5 based on an ordinary recorded and reproduced image and a picture generated by the display picture generation unit 55. It is specifically selected by an instruction from the operation input unit 58.

The control unit 57 controls a reproduction operation by the image reproduction apparatus 50 based on an instruction from the operation input unit 58 and a state of each of the units. It is provided with a CPU etc. having a program which describes a method and a procedure for control. Furthermore, it is also possible to provide control so as to display an actuation situation on a display device not shown.

The operation input unit 58 is a device for receiving an instruction of the user to operate the image recording apparatus 50. A mechanical input device or a remote control by use of infrared light etc. is used as the operation input unit.

The following will describe a flow of operations of the image reproduction apparatus 50 with reference to FIG. 10. First, when reproduction starts, control data and a still picture is reproduced from the image information recording area 3 on the recording medium 1 (S301). These reproduced control data and still picture are recorded in the control data memory 53 and the still picture memory 54 respectively (S302).

Next, it is determined whether ordinary reproduction is to be performed (S303). The reproduction mode is set through the operation input unit 58. If ordinary reproduction is to be performed, recorded images are reproduced sequentially to the last one (S304, S305). If it is determined at step S303 that ordinary reproduction is not to be performed, on the other hand, the reproduction mode is determined (S306). For example, only images related to a slow-motion are reproduced, they are reproduced except for the slow-motion, or a variety of reproduction modes such as a one where only portions selected in a still picture are reproduced are set by the operation input unit 58. They are reproduced to the last one in an instructed reproduction mode (S307, S308).

The above-mentioned configuration makes it possible to reproduce an image signal containing a slow-motion image recorded on the recording medium 1 and information related to the slow-motion image contained in the image signal in order to easily confirm the recorded contents and also display them on the display 5 in a mode that matches a user's desire.

It is to be noted that the above-mentioned configuration components is provided with an addition of a device that the image recording apparatus typically has.

### (Embodiment of image recording/reproduction apparatus)

The following will describe an embodiment of an image recording/reproduction apparatus of the present invention with reference to FIG. 9. The image recording/reproduction apparatus of the present embodiment uses a recording medium 1 of the present invention to thereby record an image and also detect a slow-motion image in an image signal, in order to record information related to this slow-motion image and also reproduce information related to the recorded image signal and the slow-motion image, thus enabling various reproduction operations. It is to be noted that an image recording/reproduction apparatus 70 of the present invention integrates the functions of the above-mentioned image recording apparatus 30 and image reproduction apparatus 50, so that description of the similar components is omitted, to appropriately reference the description of the image recording apparatus 30 and the image reproduction apparatus 50.

The image recording/reproduction apparatus 70 comprises a slow-motion image detection unit 71, a slow-motion image information extraction unit 72, a control data memory 73, a still picture memory 74, switches 75 and 80, a recording unit 76, a reproduction unit 77, a slow-motion image information demodulation unit 78, a display picture generation unit 79, a control unit 81, and an operation input unit 82.

The control data memory 73 is used to store data related to a slow-motion image both in recording and in reproduction, while the still picture memory 74 is used to store still picture data related to a slow-motion image both in recording and in reproduction. Of course, they may be used independently.

Furthermore, the control unit 81 comprehensively controls a recording operation and a reproduction operation of the image recording/reproduction apparatus 70 based on an instruction from the operation input unit 82 and a state of each of the units. It is provided with a CPU etc. having a program which describes a method and a procedure for control. Furthermore, it is also possible to provide control so as to display an actuation situation on a display device not shown.

The operation input unit 82 is a device for receiving an instruction of the user to operate the image recording/reproduction apparatus 70. A mechanical input device or a remote control by use of infrared light etc. is used as the operation input unit.

Furthermore, an operation flow of the image recording/reproduction apparatus 70 is the same as that of the image recording apparatus 30 in terms of recording and as that of the image reproduction apparatus 50 in terms of reproduction.

The above-mentioned configuration makes it possible to record an image signal and information related to a slow-motion image contained in the image signal on the recording medium 1 and also reproduce the recorded image signal and information related to the slow-motion image contained in the image signal in order to display them in a mode that matches a user's desire.

The present invention is applicable not only to the above-mentioned configuration of the image recording apparatus 30, the image reproduction apparatus 50, and the image recording reproduction apparatus 70 but also to any configuration that has the same operations and actions, which are all covered by the scope of the present invention.

Furthermore, the present invention is not limited to the above-mentioned embodiments and are subject to modifications as far as they do not depart from the gist or idea of the present invention that can be understood from the claims or the specification as a whole, and also a recording medium, an image recording apparatus, an image reproduction apparatus, and an image recording/reproduction apparatus that involves such modifications are covered by the technical idea of the present invention.

As described above, by using a recording medium, an image recording apparatus, an image reproduction apparatus, and an image recording/reproduction apparatus according to the present invention, it is possible to record a program and also securely detect an important scene broadcast in a slow-motion image from the program in order to, based on the scene, extract image information, a recording address, a real-time recording position of an original image of the slow-motion image, etc. and record them in correspondence with recorded image information, thus performing a variety of reproduction operations in accordance with a viewer's purpose such as viewing all digests of important portions of programs completely.

Furthermore, by applying a technology to detect a ratio between moving pictures and still pictures to thereby detect a slow-motion image, it is possible to utilize the present invention as a device which detects a frame rate conversion between PAL and NTSC or picture conversion to a movie film and an NTSC film and also to extract thus detected data and record it as information related to contents of a program to be recorded.

## Claims

1. A recording medium (1) for recording an image signal, **characterized by**:
a first recording area (4) for recording the image signal; and
a second recording area (3) for recording information related to a slow-motion image signal contained in the image signal.

2. The recording medium (1) according to claim 1, wherein the second recording area comprises:
an area (304) for recording a recording position of the slow-motion image signal;
an area (301) for recording a recording time lapse of the slow-motion image signal;
an area (302) for recording a reproduction rate of the slow-motion image signal; and
an area (305) for recording a still picture related to the slow-motion image signal.

3. The recording medium (1) according to claim 2, wherein the second recording area (3) further comprises an area (303) for recording a recording position of an image signal which provides an original of the slow-motion image signal and is obtained from a recording time lapse of the slow-motion image signal and a reproduction rate of the slow-motion image signal.

4. The recording medium (1) according to any one of claims 1 to 3, wherein the recording medium is a disk-shaped medium.

5. An image recording apparatus (30) for recording an image signal on a recording medium (1), **characterized by**:
an image signal recording device (37) which records the image signal on the recording medium;
a slow-motion image detection device (31) which detects a slow-motion image signal contained in the image signal;
a slow-motion recording position detection device (32) which detects a recording position of the slow-motion image signal detected by the slow-motion image detection device;
a slow-motion recording position recording device (37) which records a recording position detected by the slow-motion recording position detection device;
a recording time lapse recording device (37) which records a recording time lapse of the slow-motion image signal;
a reproduction rate detection device (32) which detects a reproduction rate of the slow-motion image signal; and
a still picture recording device (37) which records a still picture related to the slow-motion image signal.

6. The image recording apparatus (30) according to claim 5, wherein the image recording apparatus comprises an operation device (37) which obtains a recording time lapse of an image signal which provides an original of the slow-motion image signal, from a recording time lapse of the slow-motion image signal and a reproduction rate of the slow-motion image signal.

7. The image recording apparatus (30) according to claim 6, wherein the image recording apparatus further comprises an original signal recording position recording device (37) which records, based on a recording time lapse of an image signal which provides an original of the slow-motion image signal obtained by the operation device, a recording position of the original image signal.

8. The image recording apparatus (30) according to any one of claims 5 to 7, wherein a recording position of the slow-motion image signal, a recording time lapse of the slow-motion image signal, a reproduction rate of the slow-motion image signal, a recording position of an image signal which provides an original of the slow-motion image signal, and a still picture related to the slow-motion image signal are recorded in a predetermined area on the recording medium after the image signal is recorded.

9. The image recording apparatus (30) according to any one of claims 5 to 8, wherein the slow-motion image signal is determined on the basis of inter-field correlation of image data.

10. The image recording apparatus (30) according to any one of claims 5 to 8, wherein the slow-motion image signal is determined on the basis of the number of blocks that are recognized to be of a slow-motion image signal, a field being divided into a plurality of blocks beforehand to obtain inter-field correlation of picture data for each of the blocks.

11. An image reproduction apparatus (50) for reproducing a recording medium (1) in which an image signal containing a slow-motion image signal is recorded, **characterized by**:
an image signal reproduction device (51) which reproduces the image signal;
a slow-motion position information storage device (53) which stores position information recording the slow-motion image signal contained in a signal reproduced by the image signal reproduction device;
a slow-motion recording time lapse storage device (53) which stores recording time lapse information of the slow-motion image signal contained in a signal reproduced by the image signal reproduction device;
a reproduction rate storage device (53) which stores reproduction rate information of the slow-motion image signal contained in a signal reproduced by the image signal reproduction device; and
a still picture storage device (54) which stores a still picture related to the slow-motion image signal contained in a signal reproduced by the image signal reproduction device.

12. The image reproduction apparatus (50) according to claim 11, wherein the image reproduction apparatus further comprises an original signal recording position storage (53) device which stores position information of an image signal which provides an original of the slow-motion image signal contained in a signal reproduced by the image signal reproduction device.

13. The image reproduction apparatus (50) according to claim 11, wherein the image signal reproduction device reproduces the image signal after information related to the slow-motion image signal is reproduced and stored.

14. The image reproduction apparatus (50) according to claim 11, wherein the image reproduction apparatus comprises an instruction device (58) which instructs a display mode.

15. An image recording/reproduction apparatus (70) for recording an image signal containing a slow-motion image signal on a recording medium and reproducing the image signal, comprising an image recording unit and an image reproduction unit, wherein:
(i) the image recording unit comprises:
an image signal recording device (76) which records the image signal on the recording medium;
a slow-motion image detection device (71) which detects a slow-motion image signal contained in the image signal;
a slow-motion recording position detection device (81) which detects a recording position of the slow-motion image signal detected by the slow-motion image detection device;
a slow-motion recording position recording device (81) which records a recording position detected by the slow-motion recording position detection device;
a recording time lapse recording device (81) which records a recording time lapse of the slow-motion image signal;
a reproduction rate detection device (72) which detects a reproduction rate of the slow-motion image signal; and
a still picture recording device (81) which records a still picture related to the slow-motion image signal; and
(ii) the image reproduction unit comprises:
an image signal reproduction device (77) which reproduces the image signal;
a slow-motion position information storage device (73) which reads out and stores position information recording the slow-motion image signal, from a signal reproduced by the image signal reproduction device;
a slow-motion recording time lapse storage device (73) which reads out and stores recording time lapse information of the slow-motion image signal from a signal reproduced by the image signal reproduction device; and
a reproduction rate storage device (73) which reads out and stores reproduction rate information of the slow-motion image signal from a signal reproduced by the image signal reproduction device.
